# EUROPEAN PATENT APPLICATION

(11) **EP 4 131 300 A1**
(43) Date of publication of application: **08.02.2023**
(21) Application number: 21781076.1
(22) Date of filing: 29.03.2021
(51) Int. Cl.: H01G 9/008, H01G 9/012, H01G 9/15

(54) **SOLID ELECTROLYTE CAPACITOR AND METHOD FOR MANUFACTURING SAME**

(30) Priority: 31.03.2020 JP 2020063757
(71) Applicant: Nippon Chemi-Con Corporation, Tokyo 141-8605 (JP)
(72) Inventor: SATO, Kenta, Tokyo 141-8605 (JP); ITO, Yusaku, Tokyo 141-8605 (JP); OKAMOTO, Mizuki, Tokyo 141-8605 (JP); ASHINO, Hirotugu, Tokyo 141-8605 (JP)
(74) Representative: Baldus, Oliver
(86) International application number: PCT/JP2021/013430
(87) International publication number: WO 2021/200882

(57) **Abstract**

A solid electrolytic capacitor with reduced leakage current is provided.

An anode foil 3 dielectric oxide film is formed, a lead terminal 6-1 which is connected to the anode foil 3, a capacitor element 2 including the anode foil 6-1, is formed in the capacitor element 2, and a solid electrolyte containing a conductive polymer, and a coating layer 14 for elasticating a conductive polymer forming solution between the anode foil 3 and the lead terminal 6-1 by forming a solid electrolytic capacitor 1. Preferably, the coating layer 14 is a solid-state electrolytic capacitor formed at least in the opposite portion of the external leading terminals 6-1 to said anodal foil 3.

## Description

### [Technical Fields].

The present invention relates to a wound solid electrolytic capacitor having a solid electrolyte containing a conductive polymer and a method for manufacturing the same.

### [Background Techniques].

Electrolytic capacitor utilizing a valve action metal such as tantalum or aluminum, bywidening the valve action metal as the anode-side electrode in the shape of a sintered body or etching foil or the like, it is possible to obtain a large capacity in a small size. In particular, the solid electrolytic capacitor is small, large capacity, low equivalent series resistance, in addition to having such characteristics as easy chipping and suitable for surface mounting, it is indispensable for miniaturization, function enhancement, and cost reduction of electronic equipment.

As a solid electrolyte, manganese dioxide or a 7,7,8,8-tetracyanoquinodimethane (TCNQ) complex is known. Recently, a conductive polymer derived from a monomer having a π-conjugated double bond, such as poly(3,4-ethylenedioxythiophene) (PEDOT), which is excellent in adhesion to a dielectric oxide film formed on a surface of an anodic foil, has rapidly become popular as a solid electrolyte. In the conductive polymer, a polyanion such as an organic sulfonic acid is used as a dopant during chemical oxidative polymerization or electrolytic oxidative polymerization, and high conductivity is exhibited.

In addition, a so-called hybrid type of solid electrolyte capacitor has been proposed in which an electrolyte layer is formed in a capacitor element opposed to an anodal foil and a cathodal foil, and electrolyte is impregnated in the pore of the capacitor element (see, for example, Patent 1). The solid electrolyte capacitor with this electrolyte also provides the electrolyte solution to repair the defective part of the dielectric oxide capsule and reduces the leakage current of the solid electrolyte capacitor.

### [Prior art documents]

### [Patent literature].

[Patent literature 1]. JP 2006-114540

### [SUMMARY OF THE INVENTION]

### [Problem to be solved by the invention]

Subsequently, solid electrolyte capacitors with only solid electrolyte layers and solid electrolyte layers combined with electrolyte fluids are simply referred to as solid electrolyte capacitors. As the structure of the solid electrolytic capacitor, generally, an anode foil formed with a dielectric oxide film on the surface of the expanded aluminum foil, and the cathode foil as an electrolyte in the capacitor element formed by winding through a separator solid electrolyte layer or, there are those comprising a solid electrolyte layer and the electrolyte. In the field of such solid electrolytic capacitors, further reduction of the leakage current caused by the defect portion of the dielectric oxide film is always required. However, remediation of defective parts by electrolytic solution cannot be expected in solid electrolytic capacitors only with solid electrolytes. And, even if the solid electrolyte capacitor combined with the electrolyte solution is used, the repair of the defective part can not be expected, when the position of the defective part is not filled with the electrolyte solution.

The invention has been proposed to solve the above problems, the purpose of which is to provide a solid electrolytic capacitor with reduced leakage currents and a method for its production.

### [Means for solving the problem].

The present inventors have, in the case of a solid electrolytic capacitor wound, the lead terminal of the anode side during winding has caused a defect portion in the dielectric oxide film. Defective portion by the lead-out terminal, as compared with the damaged portion caused by the bending stress applied to the entire anode foil during winding, even in the repair step of the dielectric oxide film of the manufacturing process of the solid electrolytic capacitor it may be difficult to be completely repaired. Further, when placing the solid electrolytic capacitor on a wiring board such as a circuit board, the stress is applied to the extraction terminal, by the stress is transmitted to the contact portion between the extraction terminal and the anode foil, the dielectric oxide film of the anode foil surface is damaged there is a case where the defect portion is formed. The dielectric oxide film is also formed on the surface of the extraction terminal of the anode side. Dielectric oxide film of the lead-out terminal surface, before connecting the lead terminal to the anode foil, or is formed by forming a surface of the lead-out terminal by previously immersed in the chemical conversion solution, a capacitor element produced by winding an anode foil connecting the lead terminal when the repair conversion surface of the lead terminal is formed in some cases. There is a case where a defect portion also occurs in the dielectric oxide film formed on the extraction terminal. It was found that the defect portion generated in the dielectric oxide film formed on such anode foil and the lead-out terminal contributed to an increase in the leakage current of the solid electrolytic capacitor. Further, as a result of the sharp research, it was proven that this increase of leakage current occurred when conductive polymer existed near the defect, and there was little or no electrolyte in the vicinity of the defect. In other words, it was proven that the leakage current could be suppressed, if the conductive polymer was absent near the defect. Even when a solid electrolytic capacitor is used with an electrolyte solution, the electrolyte is impregnated after the conductive polymer is impregnated into the capacitor element. This leads to leakage currents when the conductive polymer is present in the defect where the external leading terminal is created, because the conductive polymer is blocked in the air space between the external leading terminal and the electrode foil, and the electrolyte is difficult to stain.

The present invention has been made on the basis of this finding, an anode foil dielectric oxide film is formed, a lead terminal connected to the anode foil, a capacitor element including the anode foil, formed in the capacitor element, a solid electrolyte containing a conductive polymer, the anode foil and forming a coating layer that elasticates a conductive polymer forming solution between the lead terminal, characterized in that.

The formation of a coating layer elastic of conductive polymer forming solution between the anodal foil and an external leading terminal inhibits the entry of conductive polymer forming solution between the anodal foil and the external leading terminal. Therefore, it is possible to suppress the adhesion of the conductive polymer to the vicinity of the defect portion caused by the lead terminal between the anode foil and the lead terminal, the leakage current is suppressed. Further, when the defective portion is present in the dielectric oxide film on the surface of the lead-out terminal, it is possible to suppress the adhesion of the conductive polymer to the vicinity of the defective portion, the effect of leakage current is suppressed can also be expected. The coating layer may form at least in the opposite part of the external leading terminal to said anodal foil.

The coating layer may be formed on the lead terminal lead-out end face side of the capacitor element from the connection portion between the anode foil of at least the lead-out terminal.

The thickness of the coating layer may be more than 10nm.

The contact angle between the surface of the coating layer and the conductive polymer forming solution may be 80 ° or more.

The thickness of the coating layer may be at least 10nm and not more than 80nm.

The coating layer may be incompatible with the solution immersed in the restoration process of the capacitor element.

The method of manufacturing a solid electrolytic capacitor, after connecting the lead terminal to the anode foil cathode foil and the dielectric oxide film is formed, winding the cathode foil and the anode foil while winding the lead terminal, a winding step of forming a capacitor element, After the winding step, formed around the lead terminal, the lead terminal is connected to the anode side foil and an electrolyte forming step of immersing a solution to form a solid electrolyte from the opposite surface of the end face of the capacitor element to be derived, at least the anode side of the lead terminal characterized in that to form a coating layer that elasticates the conductive polymer forming solution.

When a capacitor element is soaked in a conductive polymer forming solution, it is inhibited that the solution enters the void by forming a coating layer elastic to disperse liquid near the void, and the solution does not reach the defect of the dielectric oxide coat formed on the surface of the anodal foil produced by the external leading terminal. Therefore, the conductive polymer is absent in the vicinity of the defect portion in the gap portion, the leakage current is suppressed. Further, when the defective portion is present in the dielectric oxide film on the surface of the lead-out terminal, it is possible to suppress the adhesion of the conductive polymer to the vicinity of the defective portion, the effect of leakage current is suppressed can also be expected.

### [Effects of invention]

According to the invention, leakage currents can be suppressed because the probability of the presence of conductive polymers near the defect created by the external leading terminals is reduced.

### [BRIEF DESCRIPTION OF THE DRAWINGS]

[Figure 1] Illustration showing an example of a capacitor device prior to case storage related to this Embodiment.
[Figure 2] It is a cross-sectional view through an imaginary line connecting the lead terminal of the anode side of the capacitor device and the lead terminal of the cathode side according to the present Embodiment.
[Figure 3A] Illustration showing the cross-section of the hypothetical lines a-a in Figure 2.
[Figure 3B] Illustrations showing cross sections of virtual lines b-b.
[Figure 4] This Embodiment is a close-up view of the connection between the anodal foil and an anodal external leading terminal.
[Figure 5] Is a diagram showing a state of expanding the capacitor device according to the present Embodiment.
[Figure 6A] Illustration showing the connection between the external leading terminals and the electrode foil in accordance with this Embodiment.
[Figure 6B] Illustration showing the connection between the external leading terminals and the electrode foil in accordance with this Embodiment.
[Figure 6C1] Illustration showing the connection between the external leading terminals and the electrode foil in accordance with this Embodiment.

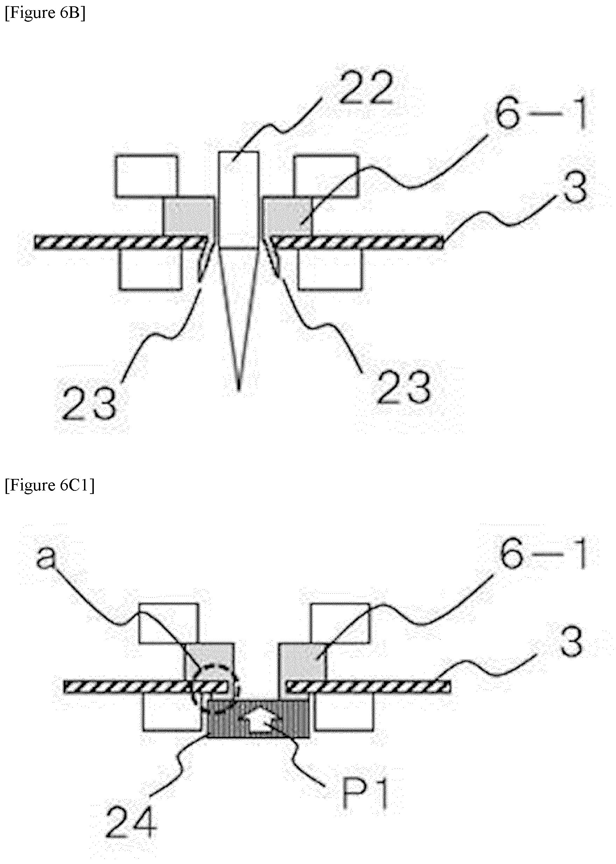

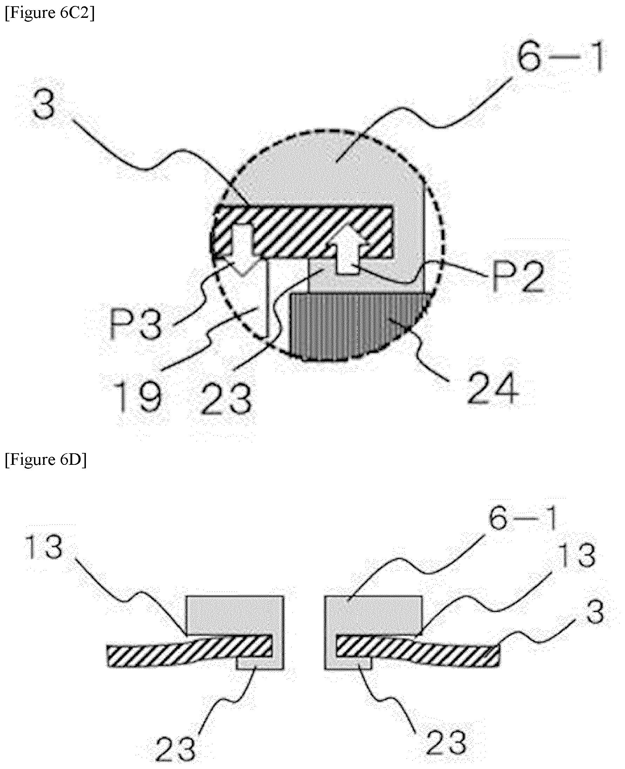

[Figure 6C2] Illustration showing the connection between the external leading terminals and the electrode foil in accordance with this Embodiment.
[Figure 6D] Illustration showing the connection between the external leading terminals and the electrode foil in accordance with this Embodiment.

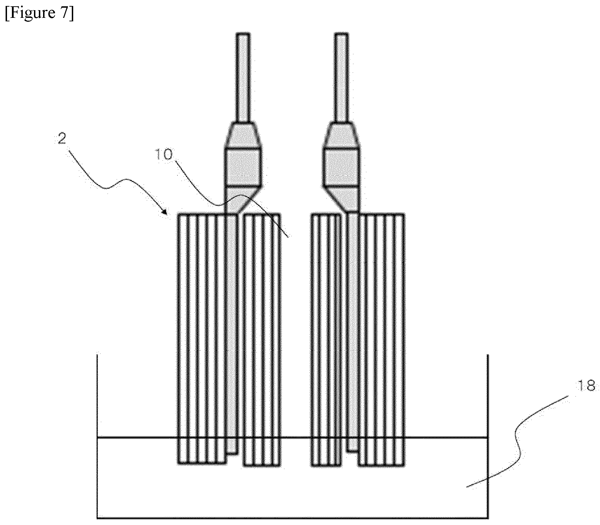

[Figure 7] A schematic diagram shows the impregnation of the conductive polymer dispersion into a capacitor element.

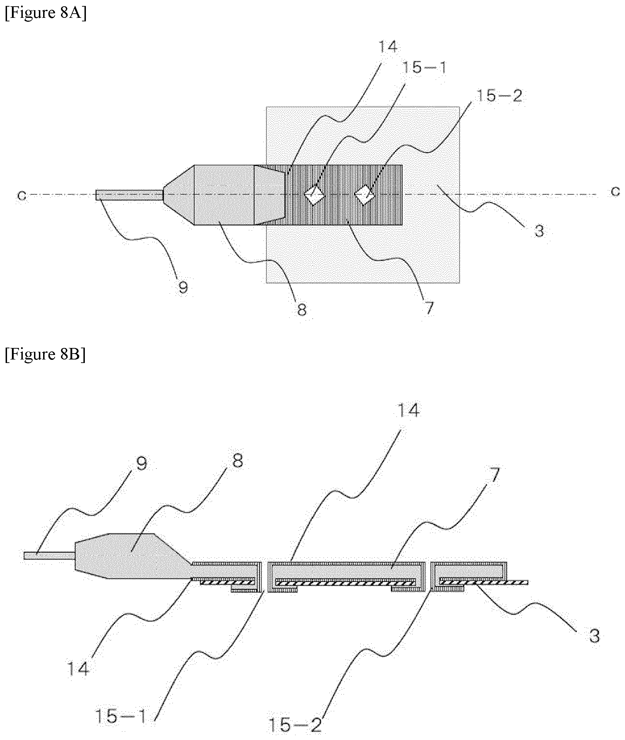

[Figure 8A] Is a diagram showing the formation position of the coating layer of Example 1.
[Figure 8B] Is a diagram showing the formation position of the coating layer of Example 1.

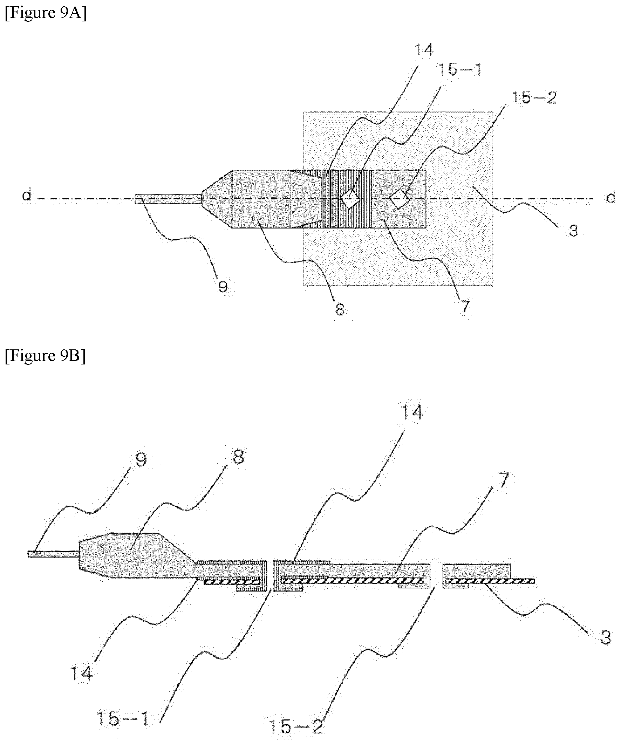

[Figure 9A] Is a diagram showing the formation position of the coating layer of Example 2.
[Figure 9B] Is a diagram showing the formation position of the coating layer of Example 2.

### [Forms for Implementing the Present invention].

The solid-state electrolytic capacitor in accordance with Embodiment of the invention will be described below. In this Embodiment, we illustrate and illustrate a solid-state electrolyte capacitor that combines electrolytes. The present invention is not limited to Embodiment described below.

### (First Embodiment)

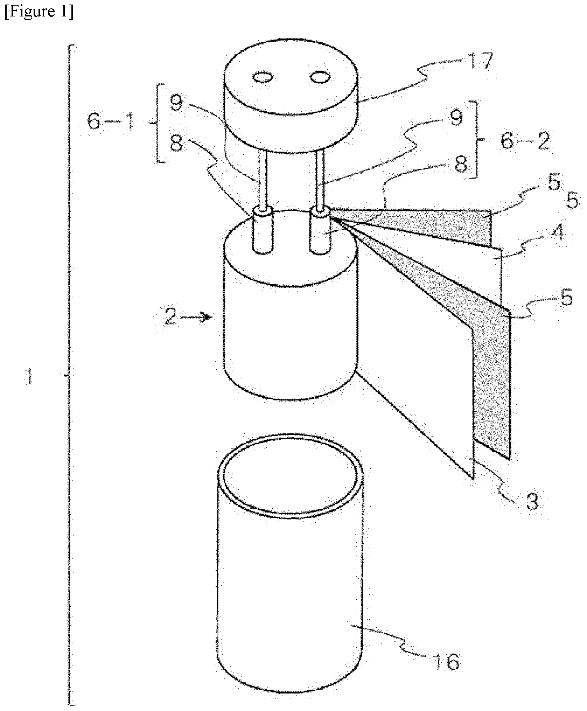

Referring to Fig. 1 to Fig. 5, the first Embodiment solid-state electrolyte capacitor is described. Figure 1 shows an example of a capacitor element prior to the first Embodim ent case. The first Embodiment solid-state electrolytic capacitor 1 is a passive element that performs charge storage and discharge by capacitance. This solid-state electrolytic capacitor 1 has, for example, a coiling-type capacitor element 2. Capacitor element 2, the anode foil 3 dielectric oxide film is formed on the surface, and the cathode foil 4 is opposed via a separator 5, the solid electrolyte is formed. Solid electrolytes adhere closely to dielectric oxide capsules formed in anodal foil 3 and function as true cathodes. This solid electrolytic capacitor 1 may be filled with an electrolytic solution in addition to a solid electrolyte.

Anodic material 3 is a long foil made of valvular metals. Valve action metals include aluminum, tantalum, niobium, niobium oxide, titanium, hafnium, zirconium, zinc, tungsten, bismuth and antimony. The purity is preferably about 99.9% or more, but impurities such as silicon, iron, copper, magnesium, and zinc may be contained. The anode foil 3 forms a plane expanding layer on the stretched foil, formed by forming a dielectric oxide film on the surface of the expanding layer. The plane expanding layer is formed by cancellous pits and tunnel-shaped pits dug in the thickness direction from the foil surface. Or, the expanding layer is formed by sintering the powder of the valve action metal, or may be formed by depositing a film such as metal particles on the foil.

The surface of the enlarged surface layer dielectric oxide film layer is formed. The dielectric oxide capsule layer is an aluminum oxide layer that oxidizes the porous structure region, for example, if the anodal foil 3 is made of aluminum. The dielectric oxide coating is formed by a chemical conversion treatment of applying a voltage in a solution without halogen ions such as ammonium borate, ammonium phosphate, an acid such as ammonium adipate or an aqueous solution of these acids.

Cathode foil 4 is a metal foil such as aluminum similarly to the anode foil 3, using those only etching treatment is applied to the surface.

The anode foil 3 and the cathode foil 4 lead terminal 6-1 of the anode side for connecting the respective electrodes to the outside, the lead terminal 6-2 of the cathode side, stitches, are connected by ultrasonic welding or the like. Through the lead terminals 6-1, 6-2, the solid electrolytic capacitor 1 is mounted to an electrical circuit or an electronic circuit. Lead terminals 6-1 and 6-2, for example, an aluminum wire and a metal wire 9. Aluminum wire includes a flat plate portion 7 formed by crushing one end side of the round bar shape by press working or the like, a round bar portion 8 of the unpressed on the other end side. The tip portion and the metal wire 9 of the round bar portion 8 is connected by arc welding or the like. Extraction terminal 6-1 of the anode side, by chemical conversion treatment on the surface of the flat plate portion 7 may form a dielectric oxide film.

The flat plate portion 7 of the lead terminal 6-1 is brought into contact with one surface of the anode foil 3, the round bar portion 8 and the metal wire 9 is protruded from the anode foil 3 so as to be perpendicular to the long side of the anode foil 3, connecting the lead terminal 6-1 and the anode foil 3. Leading terminal 6-2 and the cathode foil 4 is also connected similarly to the anode side. Connections may be made using one of a variety of connecting means, such as stitching, cold welding, ultrasonic welding or laser welding.

Anode foil 3 lead terminal 6-1 is connected, the cathode foil 4 lead terminal 6-2 is connected, wound superimposed via a separator 5. Examples of the separator 5 include cellulose such as kraft, manila hemp, hept, and rayon, and poly esters based resins such as polyethylene terephthalate, polyethylene naphthalate, and derivatives thereof, polytetrafluoroethylene-based resins, polyvinylidene fluoride-based resins, aliphatics poly amides, semi aromatics poly amides, polyimide-based resins, polyethylene resins, polypropylene resins, triphenylene sulfide resins, acrylic resins, and polyvinyl alcohol resins These resins may be used alone or in combination.

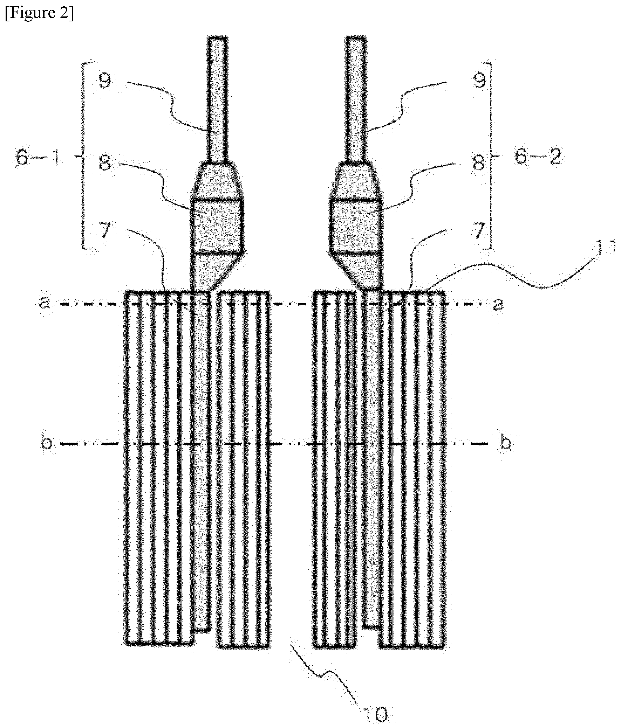

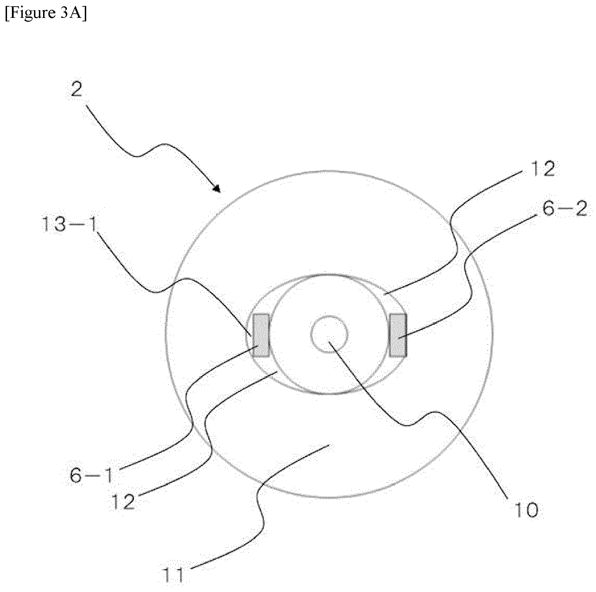

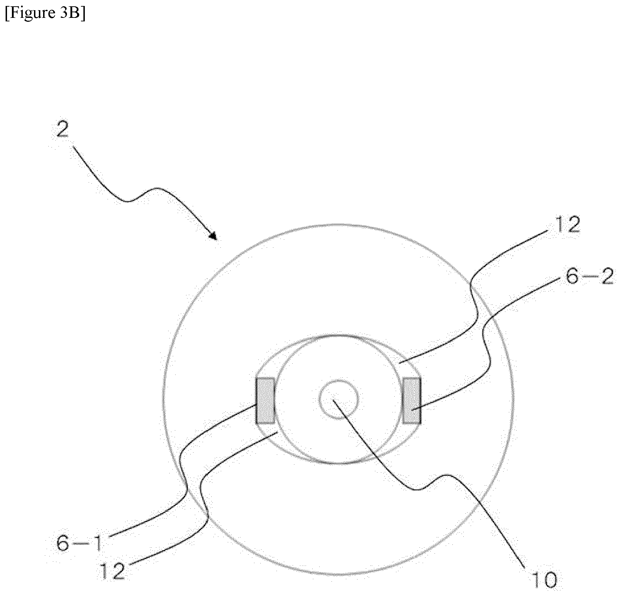

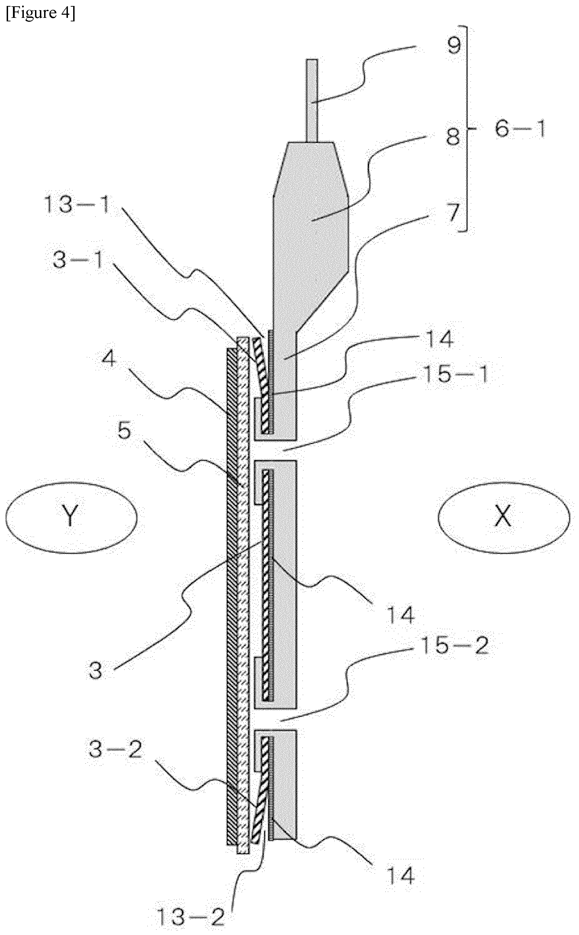

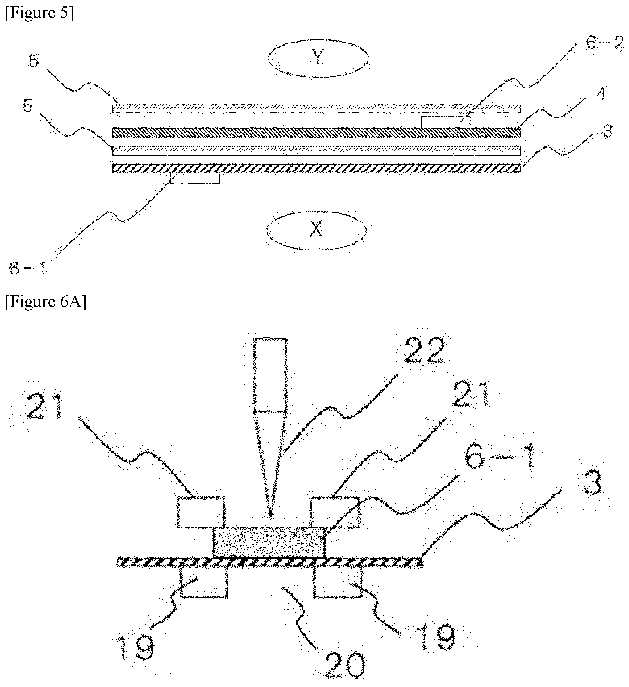

Figure 2 is a cross-sectional view through an imaginary line connecting the anode-sid e lead terminal 6-1 and the cathode-side lead terminal 6-2 of the capacitor element 1. Figure 3A is a view showing the cross-section of the hypothetical lines a-a in Figure 2, and the figure 3B is a view showing the cross-section of the hypothetical lines b-b in Figure 2. Figure 4 is an enlarged view of the connection portion of the anode foil 3 and the lead terminal 6-1 of FIG. 4, the right side of the drawing the inner peripheral side of the capacitor element 2 (center side) X, the left side of the drawing shows the outer peripheral side Y of the capacitor element 2. Figure 5 is a diagram showing a state of developing the capacitor element 2 of FIG. 5, the lower side of the drawing the inner peripheral side of the capacitor element 2 (center side) X, the upper side of the drawing shows the outer peripheral side Y of the capacitor element 2. Anode foil 3, the lead term inal 6-1 is connected to the surface of the inner peripheral side X of the capacitor element 2, the cathode foil 4, the lead terminal 6-2 is connected to the surface of the outer peripheral side Y of the capacitor element 2.

As shown in FIGS. 1 to 3, the capacitor element 2 has a shape of a wound body. Central portion of the capacitor element 2, because it is withdrawn after winding the winding shaft used during winding, and a hole portion 10 penetrating from one end face of the capacitor element 2 to the other end face. Leading terminals 6-1, 6-2 are entangled by winding process, the lead terminal 6-1 is one end face of the capacitor element 2, and is derived from the lead terminal lead-out end face 11 of 6-2. Further, the lead terminals 6-1 and 6-2, the winding layer to which the lead terminal is connected, is sandwiched between the winding layer of the one inner periphery thereof. The pinching of the lead terminal 6-1, 6-2, the width direction of the lead terminal 6-1, 6-2, in other words, around both ends in the circumferential direction of the capacitor element 2, crescent-shaped hole portion 12 is generated. Crescent-shaped hole 12, along the axis of the capacitor element 2 extends through the capacitor element 2 has an opening on both end faces of the lead terminal deriving end face 11 and the opposite end face of the capacitor element 2.

Gaps 13-1, 13-2 are generated between the extraction terminal 6-1 of the anode foil 3. The gap 13-1, 13-2 is caused by the structure of the connecting method and the capacitor element 2 between the anode foil 3 and the lead terminal 6-1. As a result of the structure of the capacitor element 2, the lead terminal 6-1 of the anode side with respect to the anode foil 3, it may be disposed on the center side of the capacitor elemen t 2. As shown in FIG. 4, the length direction of the opposing portion of the lead terminal 6-1 of the anode foil 3, in other words, the end portion 3-1 in the direction perpendicula r to the circumferential direction of the capacitor element 2 is slightly along the outer peripheral side Y. Since the dielectric oxide film formed on the surface of the anode foil 3 is hard and brittle, the anode foil 3 is harder than the cathode foil 4, acts on the outer peripheral side of the capacitor element 2 by its restoring force even when wound. Therefore, the connection portion between the anode foil 3 maintains a state in contact with the lead terminal 6-1, the end portion 3-1 near away from the connection portion between the lead terminal 6-1 is slightly warped on the outer peripheral side Y, the anode foil 3 and the lead terminal 6-1 gap portion 13-1, 13-2 occurs between. Such a phenomenon, with respect to the anode side of the lead terminal 6-1 is the anode foil 3, but appears remarkably when connected to the center side X of the capacitor element 2 is not limited thereto. With respect to the anode side of the lead terminal 6-1 is the anode foil 3, in the case of being connected to the outer peripheral side Y of the capacitor element 2, since the capacitor element 2 is wound structure, the anode foil 3 is curved around the connecting portion between the lead terminal 6-1, the width direction of the lead terminal 6-1, in other words the end portion and the anode foil 3 in the circumferential direction of the capacitor element 2 is spaced apart, there is a case where the gap portion 13-1, 13-2 occurs, the same problem is considered to occur.

As due to the connection method between the anode foil 3 and the lead terminal 6-1, the stress applied to the anode foil 3 during connection. The connection, for example, by penetrating the cut and raised piece 23 generated in the lead terminal 6-1 by inserting the stitch needle to the flat plate portion 7 of the lead terminal 6-1 superimposed on the anode foil 3 to the anode foil 3, cut and raised piece 23 by pressure molding, it is connected by sandwiching the anode foil 3 between the flat plate portion 7 and the cut a nd raised piece 23. Thus, the connection between the lead terminal 6-1 and the anode foil 3 is performed.

Connecting, as shown in FIG. 6A, placing the anode foil 3 on the lower mold 19, placing the flat plate portion 7 of the lead-out terminal 6-1 at a position for closing the hole portion 20 of the lower mold 19, sandwiched by the upper mold 21.

Next, as shown in Fig. 6B, the stitching needle 22 is lowered from the drawing terminal 6-1 side. When penetrating the stitch needle 22 from the extraction terminal 6-1 side to the anode foil 3, cut and raised piece 23 generated in the extraction terminal 6-1 penetrates the anode foil 3 together with the stitch needle 22.

Next, as shown in Fig. 6C1, the stitch needle 22 is elevated, and then the mold 24, which was waiting for the translucent hole 20 of the inferior type 19, is elevated. The rise of the mold 24, and molded by pressing the cut and raised piece 23 between the mold 24 and the upper mold 21, to connect the cut and raised piece 23 to the back side of the anode foil 3. Thus, the anode foil 3 is sandwiched between the extraction terminal 6-1 and the cut-and-raised piece 23 is electrically connected to the extraction terminal 6 -1. In the connection of such a stitching, as shown in 6C2 (broken line portion a in the drawing 6C1), when pressing the cut and raised piece 23, the stress P1 applied from the mold 24 is transmitted as a stress P2 around the connecting portion between the lead terminal 6-1 of the anode foil 3 via the cut and raised piece 23. On the surface of the anode foil 3, since the hard and brittle dielectric oxide film is formed, the anode foil 3 has low flexibility. Therefore, when the stress P2 is applied, the reaction, at a portion away from the connecting portion, the stress P3 in the direction away from the lead terminal 6-1 occurs. In this state, as shown in 6D when separating the lower mold 19 and the upper mold 21 from the anode foil 3, the width direction of the end portion of the anode foil 3 and the lead terminal 6-1, in other words the gap 13-1, 13-2 occurs between the circumferential end of the capacitor 2.

As a method of connecting the anode foil 3 and the extraction terminal 6-1, the stitch method, not limited to this, the same applies to the cold welding method and the ultrasonic welding method. Cold welding, placing the anode foil 3 to the flat plate portion 7 of the lead terminal 6-1, by pressing the layer stack portion of the flat plate portion 7 from the anode foil 3 side in a cold welding mold, connecting the lead terminal 6-1 and the flat plate portion 7. Ultrasonic welding method, placing the anode foil 3 to the flat plate portion 7 of the lead terminal 6-1, by applying a pressing and ultrasonic vibration laminated portion between the flat plate portion 7 from the anode foil 3 side, the lead terminal 6-1 and the flat plate portion 7 connecting. Cold welding method, in any case of ultrasonic welding method, there is a step of pressing the lead terminal 6-1 from the anode foil 3 side. Therefore, similarly to the stitching method, the pressing portion, the anode foil 3 is pressed to the lead terminal 6-1 side, although the lead terminal 6-1 and the anode foil 3 is in close contact, the portion away from the pressing portion, the reaction of the pressing, the anode foil 3 is stressed in a direction away from the lead terminal 6-1. Therefore, even in the cold welding method and the ultrasonic welding method, the end portion in the width direction of the anode foil 3 and the lead terminal 6-1, in other words, between the end portion in the circumferential direction of the capacitor element 2, the gap 13-1, there is a possibility that 13-2 occurs.

The coating layer 14 is formed between the anode foil 3 and the extraction terminal 6-1. The coating layer 14 is formed of, for example, a silicone-based resin or a coating agent made of a fluorine based resin. The coating layer 14 may be formed between the anode foil 3 and the extraction terminal 6-1. In the first Embodiment, it is formed by applying a coating agent to the area contacting anodal foil 3 of the drawer terminals 6-1. In the case of forming the coating layer 14 to the draw terminal 6-1, among the portion in contact with the positive foil 3 of at least the draw terminal 6-1 of the flat panel 7, if it is formed in a face-to-face portion of the draw terminal end 11 from the connection portion 15-1 with the positive foil 3 close to the metal wire 9, may be formed in a portion in contact with the positive foil 3 of the flat panel 7 of the draw terminal 6-1, may be formed in the whole draw terminal 6-1. It is sufficient for the coating layer 14 to be able to resilient the solvent of the solution so that the conductive polymer forming solution does not enter into the aforementioned void portion 13-1

The thickness of coating layer 14 tends to have a smaller leakage current when it is over 1.5nm. The thickness of coating layer 14 is preferably more than 10nm. Moreover, considering the connectivity with the drawer terminals 6-1, the following 80nm is preferred: Therefore, more preferably 10nm or more and 80nm or less. The thickness of the coating layer 14 can be appropriately adjusted by adjusting the concentration of the main agent relative to the solvent. For example, in the present Embodiment, it is preferable to set 0.1 wt% to 2.0 wt%

Further, it is preferable that the contact angle between the surface of the coating layer 14 and the conductive polymer forming solution is 80 ° or more. In this way, leakage currents tend to be smaller.

Coating layer 14 has, for example, a surface resistance of 1×10⁵ Ω · cm² or more.

Further, the coating layer 14, in the case of connecting the anode foil 3 and the lead-out terminal 6-1 by a stitch connection method, the stress applied to the lead-out terminal 6-1 when forming the cut-and-raised piece 23 by piercing the stitch needle, or cracks in the coating layer 14 or it is preferable not to peel off. On the other hand, it is molded by pressing the cut and raised piece 23 in the molding die 24, when connecting the cut and raised piece 23 to the rear surface side of the anode foil 3, the coating layer 1 4 of the portion in contact with the anode foil 3 of the cut and raised piece 23 is cracked it is sufficient strength to occur. For example, when a stitch needle is pierced to form a cut-and-raised piece 23, it is believed that a 10Mpa degree of loading is applied to the surface of the lead-out terminal 6-1. Therefore, it is preferable that at least coating layer 14 has strength that does not result in tears or detach, even when 10Mpa loading is applied.

Further, or cracks in the coating layer 14, because it does not peel off, contact between the ground of the conductive polymer and the anode foil 3 and the lead-out terminal 6-1 is suppressed, it is considered that the leakage current is reduced. On the other hand, by pressing the cut and raised piece 23 in the molding die 24, when connecting the cut and raised piece 23 to the back side of the anode foil 3, the cut and raised piece 23, stresses of the degree of 50Mpa is applied. At this time, although cut and raised piece 23 is stretched by stress, also extends so as to follow the surface of the cut and raised piece 2 3, or the coating layer 14 is thin, or cracks in the coating layer 14 formed on the surface occurs, the ground portion of the cut and raised piece 23 is exposed. Since the coating layer 14 is provided with an insulating property, by the coating layer 14 is in contact with the exposed portion and the anode foil 3 of the thin portion and the ground metal, the electrical connectivity is improved.

After turning anodal foil 3, cathodal foil 4, and separator 5, solid electrolytes are form ed in the capacitor element 2. The solid electrolyte includes a conductive polymer. The conductive polymer is a doped conjugated polymer. The conjugated polymer is obtained by chemical oxidative polymerization or electrolytic oxidative polymerization of a mon omer having a π-conjugated double bond or a derivative thereof.

This solid electrolyte is interposed between anodal foil 3 and cathodal foil 4 to adhere closely with the dielectric oxide capsule. However, as discussed below, solid electrolyt es are less in the periphery of the coating layer 14 compared with the other parts of the capacitor element 2 by preventing the attachment of conductive polymer forming solutions by this coating layer 14.

Capacitor element 2 solid electrolyte is formed, not shown, is housed in the bottomed cylindrical outer case 16 made of aluminum or the like, the opening or an elastic body, by caulking by the sealing member 17 made of a composite member between the elastic body and the hard body, sealed, the solid electrolytic capacitor 1 is formed.

### (Second Embodiment)

In the first Embodiment, coating layer 14 was formed at the drawer terminals 6-1, whereas in the second Embodiment, coating layer 14 was formed at the surface where the drawer terminals 6-1 of anodal foil 3 are connected. Additional configurations are the same as in the first Embodiment and their explanations are omitted.

### (Manufacturing method)

An example of the manufacturing method for this solid-state electrolytic capacitor 1 is shown. First, a coating layer formation step that forms a coating layer 14 at the drawe r terminals 6-1 is performed. Next, the anode foil 3 connecting the lead terminal 6-1 to form a coating layer 14, wound by interposing a separator 5 between the cathode foil 4 connected to the lead terminal 6-2, the winding step of producing a capacitor element 2. Next, the restoration process is carried out by immersing the capacitor element 2 in a liquor to repair the dielectric oxide capsule. Note that, in the restorative chemical conversion step, a step of removing the chemical conversion liquid by a chemical conve rsion liquid cleaning liquid such as pure water is included in order to remove the chemic al conversion liquid from the capacitor element 2 after the restorative chemical conversion.

Next, an electrolyte forming step is performed in which a dispersion of a conductive polymer is impregnated into the capacitor element 2 to form a solid electrolyte after pas sing through a drying step of removing the chemical conversion liquid or the chemical conversion liquid cleaning liquid. When an electrolytic solution is used in combination, an electrolytic solution impregnation step of further impregnating the capacitor element 2 with an electrolytic solution is performed.

In the coating layer formation step, a coating layer 14 is formed that elastizes the conductive polymer formation solution described below between the anodal foil 3 and the drawer terminals 6-1. Formation point of the coating layer 14 may be between the anode foil 3 and the lead terminal 6-1 may be formed on the surface or the surface of the anode foil 3 of the lead terminal 6-1. When the coating layer 14 is formed on the lead terminal 6-1, it may be formed on the surface of the flat plate portion 7 between the connecting portion 15-1 and the round bar portion 8 close to the metal wire 3 of the connecting portion 15 with the anode foil 3 of the lead terminal 6-1 in the portion in contact with the anode foil 3 of the lead terminal 6-1, and may be formed on the entire surface of the flat plate portion 7 opposed to the anode foil 3 of the lead terminal 6-1 or the entire surface of the lead terminal 6-1. The method of forming the coating layer 14 may be formed by applying or spraying a coating agent to the part intended for coating layer 14 formation, and if the coating layer 14 is formed on the entire surface of the drawing terminals 6-1, the drawing terminals 6-1 may be immersed in the coating agent. In the case of forming the coating layer 14 on the surface of the anode foil 3, of the port ion in contact with the lead terminal 6-1 of the anode foil 3 may be formed between the end of the connecting portion 15-1 and the lead terminal lead-out end face 11 of the lead terminal 6-1 and the anode foil 3 may be formed on the surface in contact with the lead terminal 6-1. The coating agent may elasticate the conductive polymer forming solution and, more particularly, elasticity of the solvent of the solution. Examples thereof include resins of fluorine system such as polytetrafluoroethylene (PTFE), perfluoroalkoxy alkanes (PFA), perfluoroethylene propene copolymer (FEP), ethylene tetrafluoroethylen e copolymer (ETFE), and polyvinylidene fluoride (PVDF), and silicone-based resins such as linear dimethylpolysiloxane (terminal trimethylsilyl group), cyclic dimethylpoly siloxane, linear dialkylpolysiloxane, reticulated methyl-phenyl-polysiloxane, reticulated methyl methoxy · polysiloxane, and methyl-hydrodiene-polysiloxane These resins may be used alone or in combination. Note that, as the mixed one, a perfluoropoly ethers group and a perfluoropoly having an alkoxysilyl group in a molecule.Examples thereof include a group-modified silane and the like. The coating layer formation step may include forming the coating layer 14 followed by removing the coating layer 14 of the intended connection with the drawer terminals 6-1. For example, of the coating layer 14 may be peeled off the connection scheduled portion between the lead terminal 6-1 by laser irradiation.

In the wrapping process, defects such as voids, fissures, or scratches have occurred at each site of the dielectric oxide capsule due to insufficient formation of the dielectric oxidation capsule or bending stress caused by turning. Therefore, in the restorative treat ment, the capacitor element 2 is immersed in the liquor. As the chemical conversion solution of the remediation chemical conversion, a phosphoric acid system such as ammonium dihydrogen phosphate or diammonium hydrogen phosphate, a Boric Acid system such as ammonium borate, or an aqueous solution obtained by dissolving an adipic acid system such as ammonium adipate in water is used. Immersion time, 5 minutes or more 120 minutes or less is desirable. Thereafter, in order to remove the chemical conversion liquid from the capacitor element 2, the capacitor element 2 immersed in the chemical conversion liquid with a chemical conversion liquid cleaning liquid such as pure water is washed.

Furthermore, in the winding step, physical contact has occurred in the lead terminal 6-1 and the dielectric oxide film by winding. This contact, of the anode foil 3, a large defect portion such as cracks and scratches in the range in contact with the lead terminal 6-1 has occurred. In particular, the region in contact with the corner of the flat plate portion 7 of the lead terminal 6-1, the defect portion is most likely to occur.

The defect caused by the presence of these external leading terminals 6-1 is not completely repaired by the restoration process. Accordingly, the defect generated by the presence of the external leading terminals 6-1 remains after the restoration process.

After the restorative chemical conversion step, the chemical conversion solution and the chemical conversion solution cleaning solution are removed by drying. In this drying process, the capacitor element 2 is exposed to a hyperthermic environment of at least 100°C for not more than 30 minutes. In addition to drying by heat, the solvent may be volatilized by vacuum drying.

After drying the capacitor element 2, it forms a solid electrolyte. In the electrolyte forming step, first, a dispersion liquid in which a conductive polymer is dispersed is prepared. This dispersion is an example of a solution forming a conductive polymer. The conductive polymer is a doped conjugated polymer. As the conjugated polymer, a known one can be used without any particular limitation. Examples thereof include polypyrrole, polythiophene, polyfuran, polyaniline, polyacetylene, polyphenylene, polyphenylene vinylene, polyacene, and polythiophene vinylene. These conjugated polymers may be used alone, or 2 or more kinds thereof may be combined, and may be further a copolymer of 2 or more kinds of monomers.

Among the above conjugated polymers, a conjugated polymer composed of thiophene or a derivative thereof polymerized is preferred, and a conjugated polymer in which a 3,4-ethylenedioxythiophene (i.e., 2,3-dihydrothieno[3,4-b][1,4]dioxin), a 3-alkylthiophene, a 3-alkoxythiophene, a 3-alkyl-4-alkoxythiophene, a 3,4-alkylthiophe ne, a 3,4-alkoxythiophene, or a derivative thereof is polymerized is preferred.

As the thiophene derivative, a compound selected from thiophene having a substituent at the 3 and 4 positions is preferred, and the substituent at the 3 and 4 positio ns of the thiophene ring may form a ring together with the carbon at the 3 and 4 positions.

Although 1 to 16 carbon atoms are suitable for alkyl or alkoxy groups, particularly preferred are polymers of 3,4-ethylenedioxythiophene, designated EDOT, i.e., poly (3,4-ethylenedioxythiophene), designated PEDOT. Also, alkylated ethylenedioxythioph ene having an alkyl group added to a 3,4-ethylenedioxythiophene, and examples thereof include methylated ethylenedioxythiophene (i.e., 2-methyl-2,3-dihydro-thieno[3,4-b] [1,4]dioxin), ethyl ethylenedioxythiophene (i.e., 2-ethyl-2,3-dihydro-thieno[3,4-b] [1,4]dioxin), and the like.

As the dopant, a known one can be used without any particular limitation. Examples include inorganic acids such as boric acid, nitric acid, acetic acid, oxalic acid, citric acid, ascotic acid, tartaric acid, squaric acid, rhodizonic acid, chloroconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimidic acid, dodecylbenzenesulfonic acid, propylnaphthalenesulfon ic acid, butylnaphthalenesulfonic acid, and other organic acids. Further, examples of the polyanion include polyvinyl sulfonic acid, polystyrene sulfonic acid, polyallyl sulfonic acid, polyacrylic sulfonic acid, polymethacrylic sulfonic acid, poly(2-acrylic amides-2-methylpropanesulfonic acid), polyisoprene sulfonic acid, polyacrylic acid, polymethacrylic acid, and polymaleic acid.

These dopants may be used alone, or 2 or more of them may be used in combination. Further, these dopants may be a polymer of a single monomer, and may be a copolymer of 2 or more kinds of monomers. In addition, a polymer or a monomer may be used as the dopant.

By way of example, the conductive polymer is preferably a mixture of a powder of PEDOT and a solid content of a dopant composed of polystyrene sulfonic acid. In addition, in order to improve the impregnation property and conductivity of the dispersion of the conductive polymer, various additives may be added to the conductive polymer, or neutralization by addition of cations may be performed.

The solvent of the dispersion may be any solvent in which particles or powders of the conductive polymer are dispersed, and for example, water, an organic solvent, or a mixt ure thereof is used. Examples of the organic solvent include polar solvents, alcohols, esters, hydrocarbons, carbonate compounds, ethers compounds, chain-like ethers, hetero cyclic compounds, and nitrile compounds.

Examples of the polar solvents include N-methyl-2-pyrrolidone, N,N-dimethylform a mides, N,N-dimethylaceto amides, and dimethyl sulfoxide. Examples of the alcohols include methanol, ethanol, propanol, and butanol. Examples of esters include ethyl acetate, propyl acetate, and butyl acetate. Hydrocarbons Examples thereof include hexa ne, heptane, benzene, toluene, and xylene. Examples of the carbonate compound include ethylene carbonate and propylene carbonate. Ethers Examples of the compound include dioxane and di ethyl ethers Chain ethers Examples thereof include ethylene glycol dialkyl ethers, Propylene Glycol dialkyl ethers, polyethylene glycol dialkyl ethers, and polypropylene glycol dialkyl ethers Examples of the heterocyclic compound include 3-methyl-2-oxazolidinone and the like. Examples of the nitrile compound include acetonitrile, glutalodinitrile, methoxy acetonitrile, propionitrile, and benzonitrile.

As a solvent of the dispersion, ethylene glycol is suitable. Ethylene glycol is one of so lvents of an electrolytic solution to be described later, and does not become an impurity even if it remains in the capacitor element 2, and further, among the electric characterist ics of the product, a ESR can be particularly reduced.

FIG. 7 is a schematic view showing a state in which the dispersion liquid 18 of the conductive polymer is impregnated into the wound body. As shown in Figure 7, after preparing the dispersion solution 18, the end face opposite to the withdrawal end face 1 1 of the capacitor element 2 is immersed in this dispersion solution 18. Dispersion liquid 18 creeps up to the opening of the lead terminal lead-out end face 11 side from the opening opposite to the lead terminal lead-out end face 11 of the capacitor element 2 of the hole portion 10. The dispersion liquid 18 creeping up to the lead terminal lead-out end face 11 of the capacitor element 2 and the dispersion liquid 18 immersed in the opposite end face of the lead-out terminal lead-out end face 11, the conductive polymer is spread by the dispersion liquid 18 penetrates toward the center portion of the capacitor element 2. At this time, between the lead-out terminal deriving end face 11 side and the anode foil 3 of the capacitor element 2 of the flat plate portion 7 of the lead terminal 6-1, the stress at the time of connection between the restoring force and the anode foil 3 and the lead-out terminal 6-1 of the anode foil 3 voids 13-1, 13-2 occur. For the gap portion 13-2 of the end surface side opposite to the lead terminal lead-out end face 11 of the capacitor element 2, since the upper is closed, the dispersion liquid 18 is hardly enters. On the other hand, with respect to the gap portion 13-1 of the lead-out terminal lead-out end face 11 side, since the upper portion of the gap portion 13-1 is open, the dispersion liquid 18 has a structure that easily penetrates. However, as in the present embodiments, at least the coating layer 14 is formed in the vicinity of the entry site, making dispersion 18 difficult to penetrate. Therefore, conductive polymers are difficult to adhere near the defect caused by the presence of the external leading terminals 6-1. On the other hand, except around the gap portions 13-1 and 13-2, the conductive polymer is spread to the capacitor element 2.

The impregnation time can be set accordingly according to the size of the capacitor element 2. Prolonged impregnation has no adverse effect on properties. When impregnated into a capacitor element 2, decompression or pressurization may be used as needed to facilitate impregnation. The impregnation step may be repeated multiple times. The solvent of the dispersion of the conductive polymer is removed by transpiration by drying if necessary. Heating and drying or drying under reduced pressure may be performed if necessary.

In this electrolyte forming step, a dispersion solution of a conductive polymer is used for forming a solid electrolyte, but a solid electrolyte may be formed using a conductive polymer solution in which a conductive polymer is dissolved, for example, a soluble conductive polymer solution. Since the former is a dispersion, it is different in that a conductive polymer is dissolved in a solution and dispersed, whereas in the latter soluble conductive polymer solution, a conductive polymer is dissolved in a solution. By any treatment, a solid electrolyte may be formed in the capacitor element 2, and the present invention is not limited to these methods.

In addition, as described above, a dispersion solution of a conductive polymer or a soluble conductive polymer solution may be used for forming a solid electrolyte, but is not limited thereto. For example, a solution containing a precursor of a conductive polymer may be immersed in the capacitor element 2, and then a solid electrolyte by chemical polymerization or a solid electrolyte by electrolytic polymerization may be formed. A conductive polymer layer by chemical polymerization forms a solid electrolyte by, for example, using a 3,4-ethylenedioxythiophene as a polymerizable monomer and an alcohol solution of ferric paratoluenesulfonate as an oxidizing agent (such as ethanol), immersing a capacitor element in a mixed liquid of the above polymerizable monomer and an oxidizing agent, and generating a polymerization reaction of the conductive polymer by heating. In addition, a water washing treatment may be performed in which unreacted monomers or excess monomers are removed by washing with water before and after the heat treatment. Solid electrolyte by electrolytic polymerization forms a solid electrolyte on the surface of a self-doped conductive polymer layer by electrolytic polymerization. This self-doped conductive polymer layer is fed from the feeding electrode as an electrode to form a solid electrolyte. As this electrolytic polymerization solution, a monomer having conductivity can be used by electrolytic polymerization. As the monomer, a thiophene monomer or a pyrrole monomer is suitable. When these monomers are used, the capacitor element is impregnated in a stainless steel container into an aqueous solution for electrolytic polymerization containing a monomer and sodium 1-naphthalenesulfonate as a supporting electrolyte, and a predetermined voltage is applied. Thus, a solid electrolyte made of a water-soluble monomer (e.g., thiophene, pyrrole, or the like) by electrolytic polymerization can be uniformly formed.

When an electrolytic solution is used in combination as an electrolyte, a solid electrolyte is formed, and then an electrolytic solution is impregnated into the capacitor element 2 The electrolytic solution is filled in a void of a capacitor element 2 in which a solid electrolyte is formed. The electrolytic solution may be impregnated to such an extent that the solid electrolyte swells. In the step of impregnating the electrolytic solution, a decompression treatment or a pressure treatment may be performed if necessary.

Examples of the solvent of the electrolytic solution include a protic organic polar solvent or an aprotic organic polar solvent, and may be used alone or in combination of 2 or more. Further, as a solute of the electrolytic solution, anionic component or cationic component is included. The solute is typically a salt of an organic acid, a salt of an inorganic acid, or a salt of a complex compound of an organic acid and an inorganic acid, and is used alone or in combination of 2 or more. An acid serving as an anion and a base serving as a cation may be separately added to the solvent.

Examples of the protic organic polar solvent which is a solvent include monohydric alcohols, polyhydric alcohols, and oxyalcohol compounds. Examples of the monohydric alcohols include ethanol, propanol, butanol, pentanol, hexanol, cyclobutanol, cyclopentanol, cyclohexanol, and benzyl alcohol. Examples of the polyhydric alcohol and the oxyalcohol compound include ethylene glycol, Propylene Glycol, Glycerin, methylcellosolve, ethyl cellosolve, methoxy Propylene Glycol, di methoxy propanol, and alkylene oxide adducts of polyhydric alcohols such as polyethylene glycol and polyoxyethylene glycerin. Among them, ethylene glycol is preferred as the solvent. Ethylene glycol leads to changes in the conformation of conductive polymers with good early ESR properties and even better high temperature properties. The ethylene glycol may be more than 50 wt% in the fluid.

Examples of the aprotic organic polar solvent which is a solvent include a sulfone system, a amides system, a lactone, a cyclic amides system, a nitrile system, and an oxide system. Examples of the sulfone system include dimethylsulfone, ethyl methylsulfone, di ethyl sulfone, sulfolane, 3-methylsulfolane, and 2,4-dimethylsulfolane. Examples of amides system include N-methylform amides, N,N-dimethylform amides, N-ethyl form amides, N,N-di ethyl form amides, N-methylaceto amides, N,N-dimethylaceto amides, N-ethyl aceto amides, N,N-di ethyl aceto amides, and hexamethylphosphoric amides. Lactones, cyclic amides Examples of the system include γ-butyrolactone, γ-valerolactone, δ-valerolactone, N-methyl-2-pyrrolidone, ethylene carbonate, propylene carbonate, butylene carbonate, and isobutylene carbonate. Examples of the nitrile system include acetonitrile, 3-methoxy propionitrile, and glutaronitrile. Examples of the oxide system include dimethyl sulfoxide and the like.

As organic acids to be anionic component, carboxylic acids such as oxalic acid, succinic acid, pimelic acid, sebacic acid, phthalic acid, isophthalic acid, terephthalic acid, adipic acid, benzoic acid, toluic acid, malonic acid, 1,6-decandicarboxylic acid, azelaic acid, phloroglucinic acid, gentisic acid, protocatechuic acid, trimellitic acid, pyromeric acid, etc., Sulfonic acid is included. Further, examples of the inorganic acid include Boric Acid, phosphoric acid, phosphorous acid, hypophosphorous acid, carbonic acid, and silicic acid. Compounds of organic acids and inorganic acids include borodisalicylic acid, borodicholic acid, borodimalonic acid, borodiborozic acid, borodiazelaic acid, borodibenzoic acid, borodimaleic acid, borodimaleic acid, borodimalic acid, boroditaric acid, borodicitric acid, borodiphthalic acid, borodiresorcinic acid, borodimethylsalicylic acid, borodinaphthoic acid, borodimandelic acid and borodi(3-hydroxy)propionic acid, etc.

Further, examples of the salt of at least 1 of the organic acid, the inorganic acid, and the composite compound of the organic acid and the inorganic acid include an ammonium salt, a quaternary ammonium salt, a quaternary amidinium salt, an amine salt, a sodium salt, and a potassium salt. Examples of the quaternary ammonium ion of the quaternary ammonium salt include tetramethylammonium, tri ethyl methylammonium, and tetra ethyl ammonium. Quaternary amidinium salts include ethyl dimethylimidazolinium, tetramethylimidazolinium, and the like. Examples of the amine salt include salts of primary amines, secondary amines, and tertiary amines. Examples of the primary amine include methylamine, ethyl amine, propylamine, and the like, and examples of the secondary amine include dimethylamine, di ethyl amine, et hyl methylamine, and dibutylamine, and examples of the tertiary amine include trimethylamine, tri ethyl amine, tributylamine, ethyl dimethylamine, and ethyl diisopropylamine.

Further, other additives may be added to the electrolytic solution. Examples of excipients include alkylene-oxide adducts of polyhydric alcohols such as poly-or polyyleneglycerin, complexes of boric and polymorphic alcohols (mannito, solbit, etc.), complexes of boric and polyhydric alcohols, boric esters, nitro compound (o-nitrobenzoic m-, nitrobenzoic p-, nitrobenzoic o-, nitro phenolic, m-nitro phenolic, p-nitro phenolic, and p-nitrobenzil alcohols, and so on), and esters Phosphate. These may be used alone, and 2 or more of them may be used in combination. The amount of the additive to be added is not particularly limited, but is preferably added to an extent that does not deteriorate the characteristics of the solid electrolytic capacitor 1, and is, for example, 60 wt% or less in a liquid.

Capacitor element 2 with a solid electrolyte formed is housed in a bottomed cylindrical outer case 16 and sealed with an inclusion body 17 consisting of an elastic member such as rubber. Materials of the outer case 16 include aluminum resin containing aluminum, manganese, etc. or stainless steel. The external leading terminals 6-1 and 6-2 are drawn from the inclusion body 17. The entire circumference of the opening side end portion of the outer case 16 is caulked, the manufacture of the solid electrolytic capacitor 1 is completed.

Still, in this solid electrolytic capacitor 1, a thin 1 to 10V oxidized capsule may be formed by metaplasticization treatment as needed in the superficial layer of cathodal foil 4.

The separator 5 electrically isolates anodal foil 3 and cathodal foil 4 to prevent shunting and retains a solid electrolyte, or a solid electrolyte, and an electrolyte. When solid electrolyte retention is high and shape can be retained without a separator, the separator may be eliminated.

### (effect)

When conductive polymer is present in the vicinity of the defect portion, the leakage current of the solid electrolytic capacitor 1 is increased. On the other hand, when there is no conductive polymer in the vicinity of the defective portion, the leakage current of the solid electrolytic capacitor 1 is suppressed. Even if the electrolyte is present near the defect, the leakage current converges when there is no conductive polymer. Furthermore, even if the conductive polymer is present in the vicinity of the defective portion, when there is also an electrolyte in the vicinity of the defective portion, the leakage current converges.

The stress at the time of connection between the anode foil 3 and the drawing terminal 6-1, and the gap portion 13-1 between the anode foil 3 and the drawing terminal 6-1 caused by the action exerted on the outer peripheral side of the capacitor element 2 by the restoring force having the anode foil 3, the dispersion liquid 18 of the conductive polymer enters. Dielectric oxide film present in the gap portion 13-1, by contact with the extraction terminal 6-1, since there is a large defect portion, by the conductive polymer is adhered thereto, the leakage current is likely to increase. Moreover, even in the presence of electrolyte solution as an electrolyte, the size of the opening of the void 13-1 is slight, so when the conductive polymer is attached, the electrolyte cannot enter the interior of the void 13-1, making the leakage current difficult to converge.

In the solid electrolytic capacitor 1, since the coating layer 14 is formed at least in a portion facing the anode foil 3 of the lead terminal 6-1, the dispersion liquid 18 of the conductive polymer which tries to penetrate into the gap portion 13-1 which is formed between the anode foil 3 and the lead terminal 6-1, at least the void portion 13-1 It is suppressed from entering. Therefore, in the vicinity of the defect portion generated by the presence of the lead terminal 6-1, the conductive polymer is less than the other portions of the capacitor element 2.

Therefore, the leakage current of the solid electrolytic capacitor 1 is suppressed, or the leakage current of the solid electrolytic capacitor 1 converges.

Thus, it may be possible to elastize an conductive polymer-forming solution that attempts to enter the void 13-1 between anodal foil 3 and external leading terminals 6-1, and to form a coating layer 14 on the surface of anodal foil 3.

### [Example]

The solid electrolytic capacitors of the invention are described in detail below with reference to Figures 8 and 9. Figure 8 is a diagram showing a formation position of the coating layer 14 of Example 1, FIG 8A, the drawing from the plane direction of the anode foil 3 connecting the lead terminal 6-1, FIG 8B is a c-c cross-sectional view of FIG 8A. 9 is a diagram showing a formation position of the coating layer 14 of Example 2, FIG 9A, the drawing from the plane direction of the anode foil 3 connecting the lead terminal 6-1, FIG 9B is a d-d cross-sectional view of FIG 9A. Note that the present invention is not limited to the following examples.

### (Example 1)

As follows, solid-state electrolytic capacitor 1 of example 1 was created. Anode foil 3 and the cathode foil 4 is a strip-shaped aluminum foil which is elongated. Anode foil 3 is widened by etching treatment, to form a dielectric oxide film by chemical conversion treatment. Cathode foil 4 was plain foil or etched untreated.

As shown in Figures 8A and B, the plate 7 of the drawer terminals 6-1 was immersed in a solution of the coating agent to form the coating layer 14 in all 7 planes of the drawer terminals 6-1. The thickness of coating layer 14 served as 200nm. As the coating liquid, an fluorine type resin containing an organic solvent obtained by mixing m-xylene hexafluoride, ethyl perfluoroisobutyl ethers, and ethyl perfluorobutyl ethers was used as an organic solvent.

The anode foil 3 was attached by stitch connection lead terminal 6-1 to form a coating layer 14. The flat plate portion 7 of the lead terminal 6-1 along one surface of the anode foil 3 so as to be perpendicular to the long side of the anode foil 3, the round bar portion 8 is along so as to protrude from one long side of the anode foil 3. The cathode foil 4 also connected the extraction terminal 6-2 in the same manner. These anode foil 3 and the cathode foil 4 is opposed via a separator 5 of the manila system, wound so that the long side is rounded, to form a capacitor element 2.

Capacitor element 2 was immersed in an aqueous solution of ammonium dihydrogen phosphate at 90°C for 20 minutes, and the current of 5mA was electrified for 56.5V of applied voltages during the immersion time. After completion of the repair chemical conversion, the capacitor element 2 was left standing for 30 minutes under a temperature environment of 105 ° C., and dried.

After the capacitor element 2 was dried, it was immersed in an aqueous solution in which polystyrene sulfonic acid (PSS) and polyethylenedioxythiophene (PEDOT) were dispersed in water in a reduced pressure environment of 30kPa for 120 seconds from the side opposite to the lead-out terminal leading end surface 11 of the capacitor element 2 Thereafter, it was left standing for 30 minutes under a temperature environment of 150 ° C., and the capacitor element 2 was dried. Immersion and drying were used as a series of treatments, and the series of treatments was repeated twice. This led to the formation of a solid electrolyte in the capacitor element 2.

Next, an electrolytic solution obtained by adding ammonium borodisalicylate to a 5% ethylene glycol solution was prepared, and an electrolytic solution was impregnated into the capacitor element 2 in which a solid electrolyte was formed. Thereby the prepared ϕ6.1mm and the height 6.3mm of the winding capacitor element 2 is inserted into the bottomed cylindrical aluminum outer case 16, by mounting the sealing body 17 to the open end, sealed by crimping. Then, subjected to voltage application for 45 minutes under a temperature environment of 115 ° C., it was subjected to aging treatment for the solid electrolytic capacitor 1.

### (Example 2)

As follows, a solid-state electrolytic capacitor of example 2 was fabricated. 9A, as shown in B, the coating layer 14 is formed only on the metal line 9 side of the flat plate portion 7 of the lead terminal 6-1. Specifically, the portion forming the coating layer 14, of the portion in contact with the anode foil 3 of the lead terminal 6-1, the connecting portion 15-1 closest to the metal line 9 of the connecting portion 15 of the anode foil 3 and the lead terminal 6-1, the flat plate portion 7 It corresponds to the formation position to the end of the side of the metal line 9. Others were created with the same method and the same conditions as solid electrolytic capacitor 1 in Example 1.

### (Comparative example 1)

A solid-state electrolytic capacitor for comparison example 1 was created as follows: Except for not forming a coating layer in the external leading terminal, it was prepared under the same method and the same conditions as the solid electrolytic capacitor 1 of Example 1.

### (Leakage Current Test)

The solid electrolytic capacitors of Example 1, Example 2 and Comparative Example 1 were prepared in 60 pieces, and the reflow step with 260°C as the peak temperature was repeated twice for each solid electrolytic capacitor, and the leakage current was measured. The leakage current was measured for 120 seconds from the beginning of application with the application of a 35V at a temperature of 20°C.

The average values of the measured results of leakage currents of the solid electrolyte capacitors of Example 1, Example 2 and Comparative Example 1 are shown in Table 1 below.

**[Table 1:]**

| | Leakage Current | |
|---|---|---|
| | Initial | After Test |
| | [*µ*A] | [*µ*A] |
| Example 1 | 0.5 | 0.6 |
| Example 2 | 0.4 | 0.7 |
| Comparative Example 1 | 0.5 | 10.5 |

As can be seen in Table 1, the solid-state electrolyte capacitor of Comparative Example 1 showed increased leakage currents after the test. On the other hand, solid electrolytic capacitor 1 of example 1 and example 2, which formed coating layer 14, did not show elevated leakage currents even after testing. Further, the coating layer 14, of the portion in contact with the anode foil 3 of the lead terminal 6-1, of the connecting portion 15 between the anode foil 3 and the lead terminal 6-1, the connection portion 1 5-1 closest to the metal wire 9, the flat plate portion 7 it was recognized that there is an effect if formed at a position corresponding to the end of the metal line 9 side.

### (Example 3)

As follows, solid-state electrolytic capacitor 1 of example 3 was fabricated. The thickness of coating layer 14 formed in the drawer terminals 6-1 served as 100nm. Others were created with the same method and the same conditions as solid electrolytic capacitor 1 in Example 1.

### (Example 4)

As follows, solid-state electrolytic capacitor 1 of example 4 was fabricated. The thickness of coating layer 14 formed in the drawer terminals 6-1 served as 50nm. Others were created with the same method and the same conditions as solid electrolytic capacitor 1 in Example 1.

### (Example 5)

As follows, solid-state electrolytic capacitor 1 of example 5 was fabricated. The thickness of coating layer 14 formed in the drawer terminals 6-1 served as 40nm. Others were created with the same method and the same conditions as solid electrolytic capacitor 1 in Example 1.

### (Example 6)

As follows, solid-state electrolytic capacitor 1 of example 6 was fabricated. The thickness of the coating layer 14 formed on the extraction terminal 6-1 was a 30nm. Others were created with the same method and the same conditions as solid electrolytic capacitor 1 in Example 1.

### (Example 7)

As follows, solid-state electrolytic capacitor 1 of example 7 was fabricated. The thickness of coating layer 14 formed in the drawer terminals 6-1 served as 20nm. Others were created with the same method and the same conditions as solid electrolytic capacitor 1 in Example 1.

### (Example 8)

As follows, solid-state electrolytic capacitor 1 of example 8 was fabricated. The thickness of the coating layer 14 formed on the extraction terminal 6-1 was a 10nm. Others were created with the same method and the same conditions as solid electrolytic capacitor 1 in Example 1.

### (Example 9)

As follows, solid-state electrolytic capacitor 1 of example 9 was fabricated. The thickness of coating layer 14 formed in the drawer terminals 6-1 served as 5.2nm. Others were created with the same method and the same conditions as solid electrolytic capacitor 1 in Example 1.

### (Example 10)

As follows, solid-state electrolytic capacitor 1 of example 10 was fabricated. The thickness of coating layer 14 formed in the drawer terminals 6-1 served as 1.5nm. Other s were created with the same method and the same conditions as solid electrolytic capacitor 1 in Example 1.

### (Leakage Current Test 2)

Leakage currents of solid electrolytic capacitors of Example 1, Examples 3 to 10 and Comparative Example 1 were measured. The measurement conditions for leakage current are the same conditions as for leakage current test 1 performed in example 1, example 2, and comparison example 1.

### (Wettability test)

In addition, wettability of the coating layer of Example 1, Example 3 to Example 10 with the dispersion liquid for each film thickness was confirmed. The wettability is determined by measuring the contact angle of the coating agent used in each of the examples and comparative examples. Specifically, a coating layer of membrane thickness set in Example 1, Examples 3-10 was formed on the surface of aluminum foil in a plane that has not been subjected to such treatments as diffusion surface treatment such as etching treatment or dielectric oxide capsule formation treatment. Next, the dispersion liquid used in Example 1, Examples 3 to 10 and Comparative Example 1 described above was dropped into an aluminum foil having a coating layer formed thereon and an aluminum foil having no coating layer corresponding to Comparative Example 1, and the contact angle between the dispersion liquid and the aluminum foil after 20 seconds was determined by a Young-Lapace method.

The contact angle of each thickness of the coating layer set in Example 1, Examples 3 to 10 and Comparative Example 1, and the average value of the measurement results of leakage currents of the solid electrolyte capacitor in Examples 1, Examples 3 to 10 and Comparative Example 1 are shown in Table 2 below.

**[Table 2:]**

| | Thickness of Coating Layer [nm] | Contact Angle[degree] | Leakage Current | | |
|---|---|---|---|---|---|
| | | | initial | After Test | Rate of Change |
| | | | [*µ* A]:A | [*µ* A]:B | [B^{∗}100/A][%] |
| Example 1 | 200 | 84 | 0.5 | 0.7 | 140 |
| Example 3 | 100 | 84 | 0.5 | 0.7 | 140 |
| Example 4 | 50 | 83 | 0.5 | 0.7 | 140 |
| Example 5 | 40 | 83 | 0.6 | 0.9 | 150 |
| Example 6 | 30 | 82 | 0.6 | 0.9 | 150 |
| Example 7 | 20 | 82 | 0.6 | 0.9 | 150 |
| Example 8 | 10 | 83 | 0.5 | 0.9 | 180 |
| Example 9 | 5.2 | 73 | 0.5 | 9.6 | 1920 |
| Example 10 | 1.5 | 66 | 0.6 | 8.1 | 1353 |
| Comparative Example 1 | - | 53 | 0.5 | 10.5 | 2100 |

As can be seen in Table 2, Examples 1 and 3-10, which formed coating layer 14, had smaller leakage currents and smaller rates of change after testing compared with Example 1, which did not form coating layer 14. This shows that forming the coating layer 14 is effective in reducing the leakage current. Also, examples 1 and examples 3-8, in which the membrane thickness of coating layer 14 is taken as 10nm or greater, have a substantially reduced rate of change compared to examples 9 and 10, in which coating layer 14 is 10nm or less. In addition, examples 1 and examples 3-7, in which the membrane thickness of coating layer 14 was 20nm or greater, showed leakage currents that fell within 150% before and after the test, confirming the remarkable efficacy. Further, when checked by matching the contact angle of the coating layer 14, it was confirmed to be related to the reduction of the leakage current. That is, by the contact angle is 80 ° or more of the coating layer 14, the leakage current was confirmed to converge to a minimum in the solid electrolytic capacitor 1.

Next, in order to confirm the influence of connectivity with the anode foil 3 by the coating layer 14, the contact resistance was measured.

### (Example 11)

As follows, a solid-state electrolytic capacitor of example 11 was fabricated. Specifically, the thickness of the coating layer 14 formed in the drawer terminals 6-1 was used as 200nm, and the others were prepared in the same method and the same conditions as the solid electrolyte capacitor 1 in Example 1.

### (Example 12)

As follows, a solid-state electrolytic capacitor of example 12 was fabricated. Except for 150nm of the thickness of the coating layer 14 formed in the external leading terminals 6-1, it was prepared in the same method and the same conditions as the solid electrolyte capacitor 1 in Example 1.

### (Example 13)

As follows, a solid-state electrolytic capacitor of example 13 was fabricated. Except for 100nm of the thickness of the coating layer 14 formed in the external leading terminals 6-1, it was prepared in the same method and the same conditions as the solid electrolyte capacitor 1 in Example 1.

### (Example 14)

As follows, a solid-state electrolytic capacitor of example 14 was fabricated. Except for 80nm of the thickness of the coating layer 14 formed in the external leading terminals 6-1, it was prepared in the same method and the same conditions as the solid electrolyte capacitor 1 in Example 1.

### (Example 15)

As follows, a solid-state electrolytic capacitor of example 15 was fabricated. Except for 60nm of the thickness of the coating layer 14 formed in the external leading terminals 6-1, it was prepared in the same method and the same conditions as the solid electrolyte capacitor 1 in Example 1.

### (Example 16)

As follows, a solid-state electrolytic capacitor of example 16 was fabricated. Except for 50nm of the thickness of the coating layer 14 formed in the external leading terminals 6-1, it was prepared in the same method and the same conditions as the solid electrolyte capacitor 1 in Example 1.

### (Example 17)

As follows, a solid-state electrolytic capacitor of example 17 was fabricated. Except for 40nm of the thickness of the coating layer 14 formed in the external leading terminals 6-1, it was prepared in the same method and the same conditions as the solid electrolyte capacitor 1 in Example 1.

### (Example 18)

As follows, a solid-state electrolytic capacitor of example 18 was fabricated. Except for 30nm of the thickness of the coating layer 14 formed in the external leading terminals 6-1, it was prepared in the same method and the same conditions as the solid electrolyte capacitor 1 in Example 1.

### (Example 19)

As follows, a solid-state electrolytic capacitor of example 19 was fabricated. Except for 20nm of the thickness of the coating layer 14 formed in the external leading terminals 6-1, it was prepared in the same method and the same conditions as the solid electrolyte capacitor 1 in Example 1.

### (Example 20)

As follows, a solid-state electrolytic capacitor of example 20 was fabricated. Except for 10nm of the thickness of the coating layer 14 formed in the external leading terminals 6-1, it was prepared in the same method and the same conditions as the solid electrolyte capacitor 1 in Example 1.

### (Example 21)

As follows, a solid-state electrolytic capacitor of example 21 was fabricated. Except for 5.2nm of the thickness of the coating layer 14 formed in the external leading terminals 6-1, it was prepared in the same method and the same conditions as the solid electrolyte capacitor 1 in Example 1.

### (Example 22)

As follows, a solid-state electrolytic capacitor of example 18 was fabricated. Except for 1.5nm of the thickness of the coating layer 14 formed in the external leading terminals 6-1, it was prepared in the same method and the same conditions as the solid electrolyte capacitor 1 in Example 1.

### (Comparative example 2)

As follows, a solid-state electrolytic capacitor for comparison example 2 was fabricated. Except for not forming coating layer 14, 6-1 in the external leading terminal was created in the same method and the same conditions as solid electrolytic capacitor 1 in example 1.

### (contact resistance test)

The contact resistance between the anode foil 3 and the extraction terminal 6-1 of Examples 11 to 22 and Comparative Example 2 was measured. Specifically, 10 solid-state electrolytic capacitors of examples 11-22 and comparison example 2 were created, and for 5 of 10 each, the reflow step with 260°C as the peak temperature was repeated twice. Thereafter, decomposing 10 solid electrolytic capacitors, take out the anode foil 3 lead terminal 6-1 is connected, connecting the respective electrode terminals of the resistor meter to the round bar portion 8 and the anode foil 3 of the lead terminal 6-1. Then, while maintaining the position of the anode foil 3, by lifting the lead terminal 6-1 0.8mm, to measure the contact resistance. A model number RM3545 manufactured by Hioki Electric Co., Ltd. was used as the resistive meter. Measurement results show the total value of the resistance value and the connection resistance of the lead terminal 6-1 of the anode foil 3. Resistance values of anodal foil 3 and external leading terminals 6-1 are the same values in examples 11 to 22 and comparison example 2 because anodal foil 3 and external leading terminals 6-1 used in each example and comparison example are the same values.

The results of this contact resistance test are shown in Table 3 below. Incidentally, the contact resistance value indicates the average value of five.

**[Table 3:]**

| | Thickness of Coating Layer [nm] | Contact Resistance | | |
|---|---|---|---|---|
| | | initial | After Test | Rate of Change |
| | | [mΩ]:A | [mΩ]:B | [B^{∗}100/A][%] |
| Example 11 | 200 | 7.2 | 15.0 | 207.6 |
| Example 12 | 150 | 5.6 | 8.6 | 153.6 |
| Example 13 | 100 | 5.4 | 6.6 | 121.6 |
| Example 14 | 80 | 5.2 | 5.6 | 107.6 |
| Example 15 | 60 | 5.2 | 5.5 | 105.7 |
| Example 16 | 50 | 5.1 | 5.5 | 107.0 |
| Example 17 | 40 | 5.2 | 5.6 | 107.4 |
| Example 18 | 30 | 5.1 | 5.4 | 105.2 |
| Example 19 | 20 | 5.1 | 5.4 | 105.9 |
| Example 20 | 10 | 5.0 | 5.3 | 105.1 |
| Example 21 | 5.2 | 5.1 | 5.2 | 102.0 |
| Example 22 | 1.5 | 5.1 | 5.2 | 102.0 |
| Comparative Example 2 | - | 5.1 | 5.3 | 104.3 |

Since anodal foil 3 and external leading terminals 6-1 of examples 11-22 and comparison example 2 use the same, the resistance value of anodal foil 3 and the resistance value of external leading terminals 6-1 are the same value in examples 11-22 and comparison example 2. Therefore, the difference in measurement results shown in Table 3 is the difference in contact resistance between the anode foil 3 and the extraction terminal 6-1. As shown in Table 3, Examples 12-22 can reduce the increase in contact resistance after testing by up to 1.5-fold. From this fact, it is recognized that the increase of the touch resistivity can be suppressed by making the membrane thickness of coating layer 14 to be less than 150nm. That is, by the film thickness of the coating layer 14 is equal to or less than 150nm, even if the coating layer 14 is interposed in the connecting portion between the anode foil 3 and the extraction terminal 6-1, the anode foil 3 and the extraction terminal 6-1 connectivity is maintained, it was confirmed that a low contact resistance. This is because the coating layer 14 is provided with an insulating property, it is presumed to be caused by the electrical connectivity between the anode foil 3 and the extraction terminal 6-1 is inhibited. In addition, for Examples 14-22, the increase in contact resistance after testing can be kept below 1. 1-fold. That is to say, it was recognized that the inhibitory effect of the increase of the touch resistance appeared remarkably, when the membrane thickness of coating layer 14 was made to be under 80nm. This is by the film thickness of the coating layer 14 and 80nm or less, when connected to the anode foil 3 by pressing the cut and raised pieces during stitch connection, by cut and raised pieces are elongated, the coating layer 14 formed on the surface of the cut and raised pieces 23 or thinned to the extent that does not affect the connectivity, the ground of the cut and raised pieces 23 is exposed, it is considered that the connectivity with the anode foil is improved.

Thus, it was found that the thickness of coating layer 14 from 80 to 10nm yielded a solid electrolytic capacitor 1 with a small leakage current and low resistivity.

### [Explanation of sign].

1 Solid electrolytic capacitor
2 Capacitor element
3 Anode foil
4 Cathode foil
5 Separator
6-1 External leading terminal (anodal side)
6-1 Lead terminal (cathode side)
7 Flat plate portion
8 Round bar
9 Metal wire
10 Hole
11 Leading terminal lead-out end face
12 Hole
13-1, 13-2 Void portion
14 Coating layer
15-1, 15-2 Connecting part
16 Outer case
17 Oral inclusion
18 Dispersion
19 Inferior type
20 Perforated portion
21 Upper type
22 Stitch needle
23 Cut piece
24 Molding die

## Claims

1. A Solid Electrolytic Capacitors comprising
an anode foil with dielectric oxide film,
a lead terminal connected to the anode foil,
a capacitor element including the anode foil and
a solid electrolyte formed within the capacitor element and comprising a conductive polymer, **characterized in that** a coating layer repealing a conductive polymer forming solution between said anodal foil and an external leading terminal is formed.

2. The solid electrolytic capacitor of claim 1, **characterized in that** the coating layer is formed at least at a portion facing the anode foil of the lead-out terminal.

3. The solid electrolytic capacitor of claim 1 or 2, **characterized in that** the coating layer is formed at least at the lead-out end side of the capacitor element from the connection with the anodal foil of the external leading terminal.

4. The solid electrolytic capacitor of claims 1-3, **characterized in that** the thickness of the coating layer is not less than 10nm.

5. The solid electrolytic capacitor of claims 1-3, **characterized in that** the contact angle between the surface of the coating layer and the conductive polymer forming solution is 80° or more.

6. The solid electrolytic capacitor of claims 1-4, **characterized in that** the thickness of the coating layer is not claim than 10nm and not more than 80nm.

7. The solid electrolytic capacitor of claims 1-6, **characterized in that** the coating layer shall be incompatible with the solution immersed in the restoration process of the capacitor element

8. Method for manufacturing solid-state electrolytic capacitors, the method , **characterized in that**,
a winding step of forming a capacitor element by winding the cathode foil and the anode foil while winding the lead terminal, a winding after connecting the lead terminal to the anode foil cathode foil and the dielectric oxide film is formed,
an electrolyte formation step that immerses a solution forming a solid electrolyte from the opposite face of the end face of the capacitor element formed around the external leading terminal and derived by the external leading terminal connected to the anodal side foil, following the wounding step
wherein forming a coating layer at least on the anodal external leading terminal.
